# EUROPÄISCHE PATENTSCHRIFT

(11) **EP 2 607 029 B1**
(45) Veröffentlichungstag und Bekanntmachung des Hinweises auf die Patenterteilung: **12.07.2017**
(21) Anmeldenummer: 12198454.6
(22) Anmeldetag: 20.12.2012
(51) Int. Cl.: B25J 15/04

(54) **Werkzeugwechselsystem**
Tool changing system
Système de changement d'outils

(30) Priorität: 22.12.2011 DE 202011052430 U
(43) Veröffentlichungstag der Anmeldung: 26.06.2013
(73) Patentinhaber: KUKA Systems GmbH, 86165 Augsburg (DE)
(72) Erfinder: Neider, Reinhold, 86462 Langweid (DE)
(74) Vertreter: Ernicke, Klaus Stefan

(56) Entgegenhaltungen:
- DD-A1- 252 343
- DE-A1-102009 039 104
- JP-A- 2010 120 140
- JP-A- 2011 189 415

## Beschreibung

Die Erfindung betrifft ein Werkzeugwechselsystem für mehrteilige Werkzeuge mit den Merkmalen im Oberbegriff des Hauptanspruchs.

Ein solches Werkzeugwechselsystem ist aus der DD 226 826 A1 bekannt. Das Werkzeug ist als Robotergreifer mit wechselbaren Greiffingern ausgebildet, die an einem Halter einer Bereitstellung aufgenommen werden können. Das Werkzeug weist ein mit einer Roboterhand verbundenes Basisteil mit zwei daran verfahrbar gelagerten Aufnahmen auf, wobei jede Aufnahme mit einem Greiffinger kuppelbar ist und die Kupplungsstellung durch einen federbelasteten Riegelbolzen gesichert wird. Zum Lösen der Verriegelung fahren die Aufnahmen zusammen, wobei die Riegelbolzen gegeneinander gepresst und in eine Öffnungsstellung gedrückt werden, die ein An- und Abkuppeln der Greiffinger erlaubt. Diese Art der Verriegelung verlangt eine angepasste Formgebung der Greiffinger. Die Verriegelung ist an den Aufnahmen angeordnet und ist dadurch dauerhaften Belastungen unterworfen. Außerdem ist die gegenseitige Lage der Riegelbolzen beim Zusammenfahren der Aufnahmen nicht definiert, wobei es zu Betriebsstörungen kommen kann.

Aus der DE 37 05 884 C2 ist es bekannt, bei einem mehrteiligen Parallelgreifer wechselbare Greifbacken an querbeweglichen Aufnahmen eines Werkzeugbasisteils mittels Elektromagneten und einfacher formschlüssiger Steckzapfenverbindungen zu halten. Der Elektromagnet bildet eine steuerbare werkzeuginterne Verriegelung. Er sichert die formschlüssige Zapfenverbindung und hält die Greifbacke an ihrer werkzeugseitigen Aufnahme fest. Ein Magazin besitzt einen horizontalen Träger mit aufrechten Zentrierstiften, auf denen die abgegebenen Greifbacken abgesetzt und formschlüssig gehalten werden.
Die DE 10 2005 052 627 A1 lehrt einen ähnlichen mehrteiligen Parallelgreifer mit werkzeuginterner magnetischer Verriegelung von wechselbaren Greifbacken.
Die DE 35 13 893 A1 offenbart einen Parallelgreifer mit einer von Federrasten gebildeten Verriegelung zwischen einem Werkzeugbasisteil und wechselbaren Greiffingern. Die Federrasten werden durch eine Zustellbewegung des Roboters betätigt.
Ähnlich Werkzeugwechselsysteme mit einer durch eine Roboterbewegung betätigbaren Verriegelungseinrichtung sind aus der US 4,913,617 A, der DE 33 40 912 A1 und der DD 253 971 A1 bekannt, wobei stationäre konische Stifte ein Riegelelement spreizen. Ein Werkzeugwechselsystem gemäss dem Stand der Technik ist in Dokument DD 253343 A1 offenbart. Es ist Aufgabe der vorliegenden Erfindung, ein anderes und verbessertes Werkzeugwechselsystem aufzuzeigen.
Die Erfindung löst diese Aufgabe mit den Merkmalen im Hauptanspruch.
Das beanspruchte Werkzeugwechselsystem hat den Vorteil einer hohen Betriebssicherheit und Verfügbarkeit. Es zeichnet durch einen geringen Bauaufwand und ein niedriges Gewicht aus. Außerdem kann es ohne Zuführung von Fremdenergie, insbesondere ohne Strom- oder Druckluftanschlüsse oder dgl. auskommen. Auch der Steuerungsaufwand wird vereinfacht. Zudem lässt sich eine Spielfreiheit der Kupplungsverbindung der Werkzeugteile und eine optimierte Fähigkeit zur Übertragung von Kräften und Momenten erreichen.

Das beanspruchte Werkzeugwechselsystem eignet sich besonders für Leichtbauroboter, die eine begrenzte und relativ niedrige Kraft haben. Es ist durch seinen einfachen Aufbau auch besonders wirtschaftlich.

Das Werkzeugwechselsystem hat besondere Vorteile in Verbindung mit einem Roboter mit einer oder mehreren kraftgesteuerten oder kraftgeregelten Roboterachsen mit einer zugeordneten Sensorik, die einwirkende Belastungen erfasst. Diese Sensorik kann auch zur Steuerung der Roboterbewegungen beim An- und Abkuppeln und zur Erfassung der dabei bestehenden mechanischen Belastungssituation eingesetzt werden. Betriebsstörungen und dadurch entstehende mechanische Widerstände können detektiert und erkannt werden.

Ein Halter an der Bereitstellung weist ein Kraftelement auf, dass eine eigene Kraft zur Betätigung der Verriegelung entwickelt. Diese Kraft wirkt auf die Verriegelung eines an der Bereitstellung gehaltenen Werkzeugteils öffnend ein. Ein solches Kraftelement kann permanent wirksam sein. Es kann auch ohne eine externe Energiezufuhr wirksam sein. In einer bevorzugten Ausführungsform ist das Kraftelement als Magnet ausgebildet, dessen Magnetkraft auf die Verriegelung einwirkt und diese vorzugsweise öffnet. Ein Magnet kann beispielsweise als Permantenmagnet oder als Elektromagnet aufgebildet sein. Andere Kraftelemente können eine Wirkkraft durch Felder, insbesondere elektrische Felder, entwickeln. Ein solches Kraftelement kann z. B. von einer elektrischen Spule gebildet werden, die auch über Distanz auf ein elektrisch und ggf. auch magnetisch leitfähiges Riegelelement der Verriegelung einwirkt. Andere Kraftelemente mit eigener Kraftwirkung können mit Unterdruck oder mit Überdruck arbeiten. Ein solches Kraftelement kann z. B. als Saugeinrichtung ausgebildet sein. Die vorgenannten Kraftelemente wirken vorzugsweise ohne mechanischen Kontakt, bzw. berührungslos auf die Verriegelung ein. In einer anderen Ausführungsform kann ein Kraftelement an einem Halter mit eigener Kraftwirkung ein steuerbarer Aktor sein, der berührungslos oder auf mechanischem Wege und kontaktierend mit Formschluss oder Kraftschluss auf die Verriegelung einwirkt.

Ein Kraftelement am Halter für das wechselbare Werkzeugteil kann eine Mehrfachfunktion haben. Es kann einerseits die Verriegelung an den wechselbaren Werkzeugteilen öffnen und dadurch auch die Kupplung für ein leichtes An- und Abkuppeln öffnen, wobei der Kupplungsbewegung kein Widerstand oder zumindest kein nennenswerter Widerstand entgegengesetzt wird.

Außerdem kann ein Kraftelement das wechselbare Werkzeugteil in Ruhestellung am Halter festhalten und seine Ruhestellung sichern. Dadurch wird das wechselbare Werkzeugteil zum An- und Abkuppeln exakt positioniert.

Das Kraftelement kann eine distanzabhängige Kraftwirkung haben, die z.B. in der Anlage- und Aufnahmestellung des wechselbaren Werkzeugteils am Halter maximal ist und mit zunehmender Distanz zwischen Werkzeugteil und Halter bis auf Null abnehmen kann. Eine solche distanzabhängige Kraftwirkung besteht z.B. bei Feldern, insbesondere elektrischen und/oder magnetischen Feldern.

Durch den begrenzten Wirkweg des Kraftelements ist sichergestellt, dass die Kupplung und die Verriegelung geschlossen werden, während das wechselbare Werkzeugteil noch am Halter geführt ist. Es kann beim An- und Abkuppeln nicht verloren gehen oder in anderer unerwünschter Weise seine Lage ändern. Die Kraft zum An- und Abkuppeln sowie zum Lösen der Wirkung des Kraftelements kann durch einen Antrieb an einem anderen Werkzeugteil, insbesondere an einem Basisteil, oder durch eine Bewegung dieses anderen Werkzeugteils mittels Handhabungseinrichtung, insbesondere eines Roboters, erzeugt werden.

Das beanspruchte Werkzeugwechselsystem ist für unterschiedliche Arten von Werkzeugen geeignet. Eine besondere Eignung besteht für Greifer, insbesondere Parallelgreifer. Ein Greifer kann zwei oder mehr wechselbare Greiffinger aufweisen. Daneben sind beliebige andere Werkzeuggestaltungen möglich, wobei die kuppelbaren Werkzeugteile Tragelemente des Werkzeugs sein können. Derartige Werkzeuge können auch weitere bewegliche Teile und ggf. auch Antriebe mit externer Energiezuführung oder Energiezuführung durch den Roboter aufweisen.

In den Unteransprüchen sind weitere vorteilhafte Ausgestaltungen der Erfindung angegeben.

In einer vorteilhaften Ausführungsform ist das Kraftelement am Halter stationär und in der Nähe von Führungselementen des Halters angeordnet. Günstig ist auch eine Ausgestaltung von Führungselementen am Halter und am wechselbaren Werkzeugteil in Form von mehreren parallelen Führungsbolzen und korrespondierenden Führungsöffnungen, wobei die Führungsbolzen bevorzugt am Halter angeordnet sind. Die Anordnung kann auch umgekehrt sein.

Das mehrteilige Werkzeug weist ein mit einem Roboter verbindbares Werkzeugteil und ein oder mehrere wechselbare Werkzeugteile auf, die miteinander gekuppelt und in der Kupplungsstellung gegenseitig verriegelt werden können. Die Kupplungsverbindung ist bevorzugt formschlüssig. Sie kann außerdem spielfrei sein. Die Kupplungseinrichtung kann in einer Variante mehrere formschlüssige Kupplungselemente an den besagten Werkzeugteilen aufweisen, welche die Kupplungsposition definieren. Solche Kupplungselemente können als Kupplungsbolzen und Kupplungsöffnungen ausgebildet sein. Auch eine Ausbildung von Kupplungselementen als Ausrichtkanten ist möglich.

In einer vorteilhaften Ausbildungsform der Verriegelung ist ein Riegelelement beweglich in einem wechselbaren Werkzeugteil geführt und wirkt mit dem Kraftelement zusammen. Ein solches Riegelelement ist vorzugsweise als Riegelbolzen ausgebildet. Ein Riegelelement an einem Werkzeugteil kann mit einem anderen Riegelelement am anderen Werkzeugteil formschlüssig zusammenwirken. In einer vorteilhaften Ausführungsform ist ein Riegelelement als Riegelbolzen ausgebildet und greift mit seinem Riegelkopf in eine Riegelöffnung an einem Kupplungselement, insbesondere an einem Kupplungsbolzen, formschlüssig ein. Eine zylindrische Ausbildung von Riegelkopf und Riegelöffnung ist vorteilhaft. Günstig ist auch eine Zuordnung eines beweglichen Riegelelements, insbesondere eines Riegelbolzens, zu einem wechselbaren Werkzeugteil. Dabei empfiehlt sich die Anordnung eines bolzenartigen Kupplungselements am roboterseitigen Werkzeugteil.

Das mehrteilige Werkzeug kann in unterschiedlicher Weise ausgebildet sein. In einer bevorzugten Ausführungsform ist es als Parallelgreifer mit zwei, drei mehr parallelen und wechselbaren Greiffingern ausgebildet. In einer vorteilhaften Ausführungsform ist eine Bereitstellung als Magazin mit mehreren Haltern für verschiedene wechselbare Werkzeugteile, insbesondere wechselbare Greiffinger, ausgebildet.

Eine mit einem Werkzeugwechselsystem ausgerüstete Arbeitsvorrichtung kann einen oder mehrere mehrachsige und programmierbare Roboter aufweisen. Diese können mehrere rotatorische und/oder translatorische Roboterachsen haben. Solche Roboterachsen können eine steuer- oder schaltbare Bremse aufweisen. Ein Roboter kann positionsgesteuert sein. Er kann in einer anderen Ausführungsform eine Nachgiebigkeitsregelung, insbesondere eine reine Kraftregelung und/oder eine Kombination einer Positions- und Kraftregelung aufweisen. Die Tragkraft des Roboters und die Kraft bzw. Leistung seiner Antriebe kann begrenzt sein. Das Werkzeugwechselsystem mit einem Kraftelement an einem Halter ist für einen solchen Roboter von besonderem Vorteil.

Die Erfindung ist in den Zeichnungen beispielhaft und schematisch dargestellt. Im Einzelnen zeigen:
- Figur 1:: ein Werkzeugwechselsystem mit kuppelbaren Werkzeugteilen, einer Kupplungseinrichtung, einer Verriegelung und einem Kraftelement in perspektivischer Ansicht und in verschiedenen Betriebsstellungen,
- Figur 2:: eine teilweise geschnittene Frontansicht des Werkzeugwechselsystems von Figur 1,
- Figur 3: und 4: eine Draufsicht und eine Seitenansicht des Werkzeugwechselsystems gemäß Pfeil III und IV von Figur 2 und
- Figur 5:: eine Arbeitsvorrichtung mit einem Leichtbauroboter und mit einem Werkzeugwechselsystem von Figur 1 bis 4.

Die Erfindung betrifft ein Werkzeugwechselsystem (1) und ein Verfahren zum Wechseln von Werkzeugteilen (4). Die Erfindung betrifft ferner eine mit einem solchen Werkzeugwechselsystem (1) ausgerüstete Arbeitsvorrichtung (3).

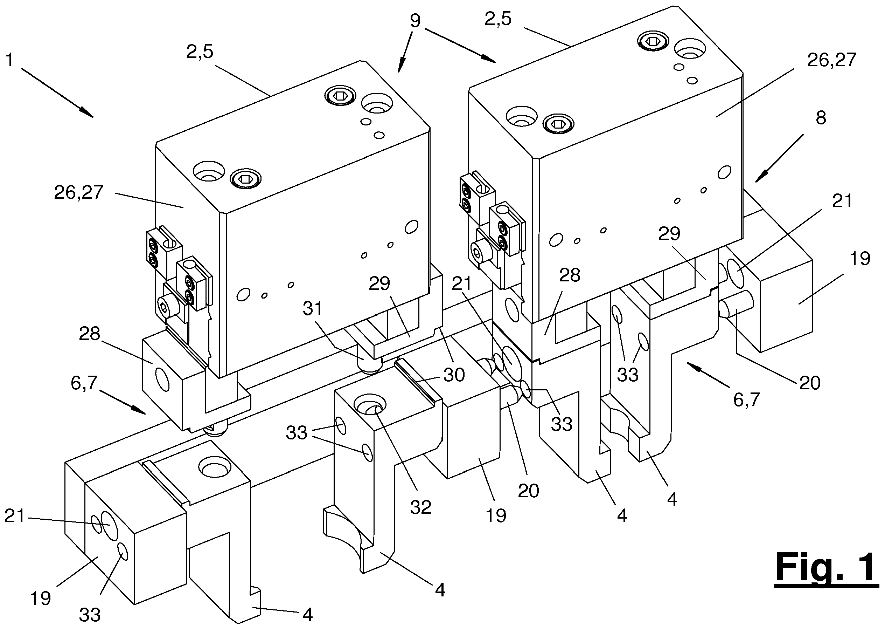

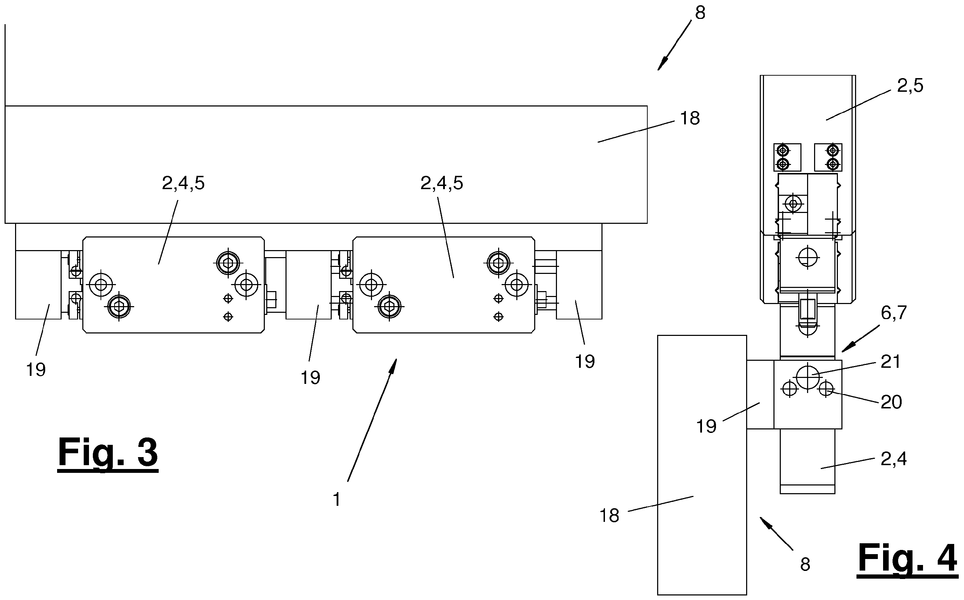

Figur 1 bis 4 zeigen ein Werkzeugwechselsystem (1) mit z.B. zwei mehrteiligen Werkzeugen (2), die beispielhaft als Greifer, insbesondere als Parallelgreifer, ausgebildet sind. Die Werkzeuge (2) bestehen jeweils aus einem Werkzeugteil (5), an dem ein oder mehrere wechselbare Werkzeugteile (4) mittels einer Kupplungseinrichtung (6) und einer zugehörigen formschlüssigen Verriegelung (7) kuppelbar sind.

In den Zeichnungen sind zwei gleichartige Werkzeuge (2) zur Verdeutlichung unterschiedlicher Betriebsstellungen dargestellt. Die Zahl der Werkzeuge (2) im Werkzeugwechselsystem (1) kann alternativ kleiner oder größer als zwei sein. Die Werkzeuge (2) können gleichartig ausgebildet sein und können z.B. gleiche oder ähnliche Werkzeugteile (5) aufweisen, die mit ggf. allen wechselbaren Werkzeugteilen (4) kuppelbar sind. Die mehrteiligen Werkzeuge (2) können alternativ völlig unterschiedlich und untereinander inkompatibel sein.

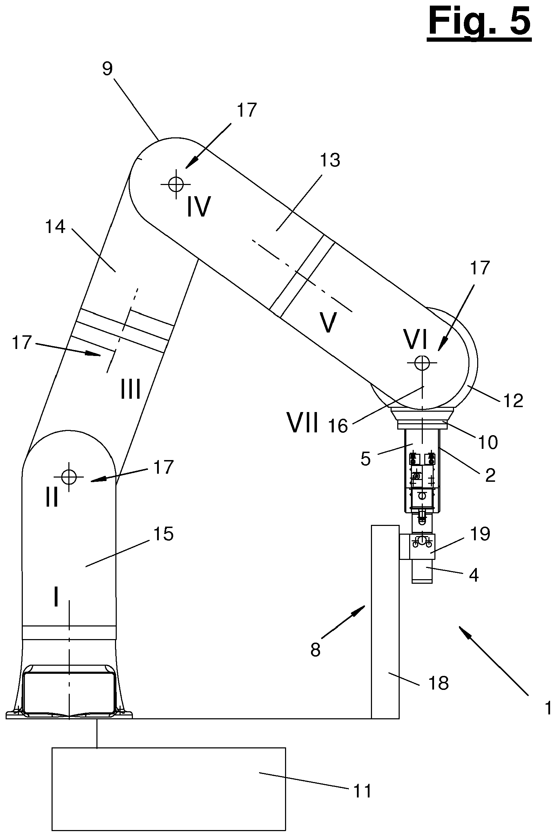

Das Werkzeug (2) kann von einer Handhabungseinrichtung (9), z.B. einem in Figur 5 dargestellten Roboter (9) oder einem beliebigen anderen mehrachsigen Manipulator, geführt werden. Hierfür ist z.B. das eine Werkzeugteil (5) über einen entsprechenden Anschluss mit einem Abtriebselement (10) der Handhabungseinrichtung (9) über einen Anschluss verbunden. Es kann vom Roboter (9) oder von außen mit Betriebsmitteln, insbesondere Energie, über Leitungen (nicht dargestellt) versorgt werden. Der Roboter (9) weist eine Robotersteuerung (11) auf, die in Figur 5 beispielhaft dargestellt ist.

Das eine Werkzeugteil (5) kann als Basisteil ausgebildet sein und weist ein Gehäuse (26) auf, an dem ein oder mehrere abstehende Aufnahmen (28,29) angeordnet sind, die in der nachfolgend beschriebenen Weise mit jeweils mindestens einem wechselbaren Werkzeugteil (4) kuppelbar sind. Das Werkzeugteil (5) kann einen Antrieb (27) für eine oder mehrere Aufnahmen (28,29) aufweisen, welcher deren Relativverstellung ermöglicht. Dies kann z.B. eine seitliche Verfahrbewegung zum Öffnen und Schließen eines Greifers (2) sein. Endschalter und/oder ein Wegmesser können zur Steuerung und Positionierung des oder der beweglichen Aufnahme(n) (28,29) dienen.

Das Werkzeug (2) kann steuerbar sein. Es ist hierzu mit einer zugehörigen Steuerung verbunden. Dies kann die vorerwähnte Robotersteuerung (11) oder eine andere Steuerung sein. Die Steuerung kann den vorgenannten Antrieb (27) und/oder eventuelle andere Werkzeugfunktionen und zugehörige Antriebe steuern. Eine entsprechende Signal- und Steuerverbindung kann über externe Leitungen oder über eine interne Leitungsführung vom Werkzeugteil (4) über den Roboter (9) hergestellt werden. Die Robotersteuerung (11) kann eine Recheneinheit, einen oder mehrere Speicher für Daten oder Programme sowie Eingabe- und Ausgabeeinheiten aufweist. Das Werkzeug (2) kann z.B. als gesteuerte Achse in der Robotersteuerung (11) implementiert sein. Die Robotersteuerung (11) kann prozessrelevante Daten, z.B. Sensordaten, speichern und für eine Qualitätskontrolle und -sicherung protokollieren.

Die wechselbaren Werkzeugteile (4) können z.B. als Greiffinger ausgebildet sein und können Greifbacken mit unterschiedlichen Geometrien zur Anpassung an unterschiedliche Werkstücke und Greifaufgaben aufweisen. In der gezeigten Ausführungsform hat der Parallelgreifer zwei Aufnahmen (28,29) und zwei Greiffinger (4), die parallel ausgerichtet sind und quer zu ihrer Längserstreckung beim Öffnen und Schließen bewegt werden können. In einer anderen, nicht dargestellten Ausführungsform kann der Parallelgreifer drei oder mehr Aufnahmen (28,29) und Greiffinger (4) aufweisen, die in der Draufsicht in einem Dreieck, Viereck oder dergleichen zum umfangsseitigen Greifen eines Werkstücks an verschiedenen Stellen ausgebildet und angeordnet sind.

Das Werkzeugwechselsystem (1) weist ferner eine Bereitstellung (8) für ein oder mehrere wechselbare Werkzeugteile (4) auf. Die Bereitstellung (8) kann als Magazin ausgebildet sein und mehrere unterschiedliche wechselbare Werkzeugteile (4) aufweisen, die unterschiedliche Geometrien für unterschiedliche Werkstücke und Greifaufgaben haben.

Die Bereitstellung (8) weist einen oder mehrere Halter (19) für die Aufnahme eines wechselbaren Werkzeugteils (4) auf. Für jedes Werkzeugteil (4) kann ein eigener Halter (19) vorhanden sein. Der oder die Halter (19) können in vorgegebener Position angeordnet sein, z.B. an einem Ständer (18). Ein Halter (19) kann alternativ mehrseitig wirken und zwei oder mehr wechselbare Werkzeugteile (4) an verschiedenen Seiten aufnehmen. Der oder die Halter (19) haben eine definierte Position, wobei auch die aufgenommenen Werkzeugteile (4) in der Aufnahme- und Ruhestellung eine definierte Position einnehmen. Der oder die Halter (19) können an einem Ständer (18) angeordnet sein.

Der Halter (19) und das wechselbare Werkzeugteil (4) weisen formschlüssige Führungselemente (20,33) auf. Diese können mehrfach vorhanden sein. In den gezeigten Ausführungsformen sind die am Halter (19) angeordneten Führungselemente (20) als parallele Führungsbolzen und die Führungselemente (33) an den wechselbaren Werkzeugteilen (4) als parallele und mit den Bolzen korrespondierende Führungsöffnungen ausgebildet. Die Führungsbolzen (20) können auf gleicher Höhe angeordnet und horizontal ausgerichtet sein, wobei sie sich ggf. quer zur Längserstreckung der wechselbaren Werkzeugteile (4) ausgerichtet sind.

Am Halter (19) ist mindestens ein Kraftelement (21) angeordnet. Für jedes aufzunehmende Werkzeugteil (4) ist mindestens ein eigenes Kraftelement (21) vorhanden. Bei mehrseitig aufnehmenden Haltern (19) können entsprechend der Zahl der Werkzeugteile (4) zwei oder mehr Kraftelemente (21) vorhanden sein.

Das Kraftelement (21) entwickelt eine eigene, nach außen wirkende Kraft, die auf die Verriegelung (7) einwirken kann. Die Kraftentfaltung kann permanent oder zeitweise vorhanden sein. Sie kann ggf. auch gesteuert werden. Die Kraftwirkung des Kraftelements (21) kann zu unterschiedlichen Zwecken genutzt werden, insbesondere zur Betätigung der Verriegelung (7).

Das Kraftelement (21) wirkt auf die Verriegelung (7) am gehaltenen oder aufgenommenen Werkzeugteil (4) ein und öffnet diese. Es hat hierfür eine geeignete Lage und Ausrichtung. Das Kraftelement (21) kann dabei auch die Kupplungsverbindung öffnen und ein Abkuppeln ermöglichen. Außerdem kann das Kraftelement (21) das aufgenommene bzw. gehaltene wechselbare Werkzeugteil (4) an dem Halter (19) mit begrenzter Kraft festhalten. Die Festhaltewirkung kann gelöst werden. Das Kraftelement (21) kann eine Zugkraft auf die Verriegelung (7) ausüben und hierüber auch das Werkzeugteil (4) festhalten. Das Kraftelement (21) kann insbesondere ein bewegliches Teil der Verriegelung (7) anziehen und bewegen. Die Kraftübertragung auf die Verriegelung (7) kann berührungslos oder nur mit einem Anlagekontakt am Ende der Anziehbewegung erfolgen. Alternativ kann eine Abstosskraft vom Kraftelement (21) ausgeübt und die Verriegelungskinematik umgekehrt werden.

Das Kraftelement (21) kann in unterschiedlicher Weise ausgebildet sein. Vorzugsweise kommt es ohne externe Energiezuführung aus. Es kann auch permanent wirksam sein. Das Kraftelement (21) kann insbesondere eine distanzabhängige Wirkung aufweisen und durch Entfernen des wechselbaren Werkzeugteils (4) deaktiviert bzw. unwirksam werden. Mit zunehmender Distanz kann dabei die Kraftwirkung bis auf Null abnehmen. In der Anlage- und Aufnahmestellung des Werkzeugteils (4) am Halter (19) kann die Kraft des Kraftelements maximal sein. Im gezeigten Ausführungsbeispiel ist das Kraftelement (21) als Magnet, vorzugsweise als Permanentmagnet, ausgebildet. Auch eine Variante als permanenter oder schaltbarer Elektromagnet ist möglich.

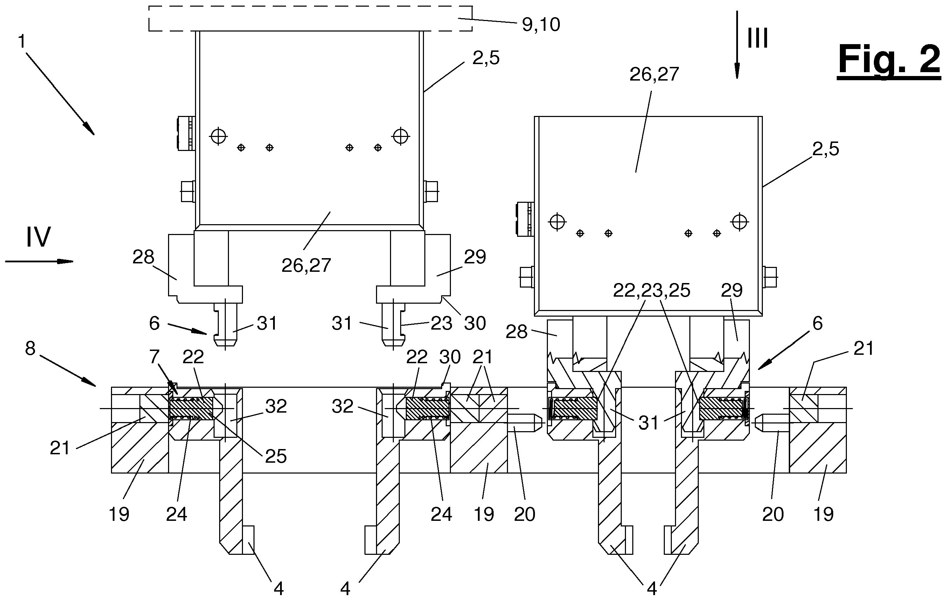

Wie Figur 1 und 2 verdeutlichen, weist die Kupplungseinrichtung (6) zwischen einer Aufnahme (28,29) und einem wechselbaren Werkzeugteil (4) mehrere Kupplungselemente (30,31,32) und die Verriegelung (7) auf. Die formschlüssig ineinander greifenden Kupplungselemente (30,31,32) definieren die Kupplungsposition und erlauben in Verbindung mit der Verriegelung (7) ein ggf. spielfreies Ankuppeln des oder der wechselbaren Werkzeugteile (4).

Ein Kupplungselement (31) ist z.B. als Kupplungsbolzen ausgebildet und befindet sich an einer Aufnahme (28,29). Der Kupplungsbolzen (31) wirkt mit einer Kupplungsöffnung (32) formschlüssig zusammen, die am wechselbaren Werkzeugteil (4), insbesondere an dessen Oberseite, angeordnet ist. Die Kupplungselemente (31,32) können quer zur Erstreckung und Führungsrichtung der vorbeschriebenen Führungselemente (20,33) am Halter (19) und Werkzeugteil (4) ausgerichtet sein. Zum Ankuppeln wird der Kupplungsbolzen (31) in die Kupplungsöffnung (32) gesteckt und wirkt dort mit der nachfolgend beschriebenen Verriegelung (7) zusammen.

Ein oder mehrere andere Kupplungselemente (30) können als Ausrichtkanten oder dgl. andere geeignete Formelemente ausgebildet sein und befinden sich z.B. am Rand der beim Ankuppeln zusammentreffenden Kontaktflächen an der Aufnahme (28,29) und dem wechselbaren Kupplungsteil (4). Ein oder mehr zusammenwirkende Ausrichtkanten (30) können z.B. als Drehsicherung dienen, welche die Winkelposition von Aufnahme (28,29) und Werkzeugteil (4) definieren und unerwünschte Drehbewegungen um die Kupplungsbolzenachse verhindern. Über Ausrichtkanten (30) oder andere Ausrichtelemente kann außerdem zur Erzielung der Spielfreiheit eine Anlage- und Spannfunktion realisiert werden.

Die Verriegelung (7) weist formschlüssig ineinander greifende Riegelelemente (22,23) und ein gegen das Kraftelement (21) wirkendes Treibelement (24) auf. Das Treibelement (24) sorgt für ein selbsttätiges Schließen der Verriegelung (7) und kann z.B. als Federelement ausgebildet sein. In den gezeigten Ausführungsformen ist das eine Riegelelement (22) als Riegelbolzen ausgebildet, der beweglich, insbesondere verschiebbar, in einem wechselbaren Werkzeugteil (4) geführt ist. Der Riegelbolzen (22) wirkt mit dem externen Kraftelement (21) zusammen und wird in der Aufnahme- bzw. Haltestellung bevorzugt von diesem angezogen. Der Riegelbolzen (22) besteht aus einem entsprechend reagierenden Material, das z.B. magnetreaktiv und insbesondere magnetisierbar ist. Das Federelement (24) ist bei dieser Ausführungsform auf dem Bolzenschaft aufgezogen und stützt sich einerseits an einem Bolzenbund und andererseits an dem Ringdeckel an dem Ende der Bolzenaufnahmeöffnung ab, die dem Kraftelement (21) in Aufnahmestellung zugewandt ist.

Der Riegelbolzen (22) ist in Aufnahme- oder Haltestellung parallel zur Wirk- und Führungsrichtung der Führungselemente (20,33) und parallel zur Wirkrichtung des Kraftelements (21) ausgerichtet. Die Wirkrichtung des Federelements (24) ist hierzu ebenfalls parallel. Der Riegelbolzen (22) kann im wechselbaren Werkzeugteil (4) vollständig und versenkt aufgenommen sein, wobei er in Schließstellung rückseitig vor dessen Außenseite endet und in Öffnungsstellung unter Einwirkung des Kraftelements (21) nur bis zur Außenseite oder kurz davor angezogen wird.

Das andere Riegelelement (23) ist als Riegelöffnung (23) ausgebildet und befindet sich am Mantel des zugeordneten Kupplungselements (31). Ein Kupplungsbolzen (31) fungiert dadurch als Rastbolzen. Die Riegelöffnung (23) liegt in Kupplungsstellung fluchtend dem Riegelbolzen (22) gegenüber und wirkt mit dessen frontseitigem Riegelkopf (25) zusammen. In Schließstellung greift der Riegelkopf (25) formschlüssig in die Riegelöffnung (23) ein.

Die Riegelöffnung (23) und der Riegelbolzen (22), insbesondere dessen Riegelkopf (25), können eine zylindrische Form mit kreisrunder, prismatischer oder sonstiger geeigneter Querschnittsgeometrie haben. Sie können eine ebene Frontseite haben und in Schließstellung passgenau mit mantelseitiger Überdeckung und Anlage ineinander greifen. Alternativ können der Riegelkopf (25) und die Riegelöffnung (23) eine konische und aufeinander abgestimmte Form haben. Ferner ist es möglich, dass der Riegelkopf (25) und die Riegelöffnung (23) nur an der von der Aufnahme (28,29) abgewandten Seite korrespondierende Keilflächen aufweisen, die für eine Spannwirkung im geschlossenen bzw. gekuppelten Zustand und für Spielfreiheit sorgen, insbesondere in Verbindung mit den anderen Kupplungselementen (30).

Das Kraftelement (21) hat eine Maximalkraft, die größer als die entgegen gerichtete Kraft des Treibelements oder Federelements (24) ist. In Aufnahme- oder Haltestellung des Werkzeugteils (4) am Halter (19) zieht das Kraftelement (21) das Riegelelement (22), insbesondere den gezeigten Riegelbolzen, an und öffnet die Verriegelung (7). Das Riegelelement (22) kann dabei so weit zurück gezogen werden, dass es nicht mehr in die Kupplungsöffnung (32) ragt. Der Kupplungsbolzen (31) kann dadurch zum An- und Abkuppeln behinderungsfrei in der Kupplungsöffnung (32) einfahren und ausfahren.

In den Zeichnungen von Figur 1 bis 4 ist jeweils das linke Werkzeug (2) in abgekuppelter Stellung und das rechte Werkzeug (2) in angekuppelter Stellung dargestellt. Für das Ankuppeln sind die Aufnahmen (28,29) vom Antrieb (27) auseinander bewegt und mit den Kupplungselementen (31) in Zustell- und Kupplungsrichtung fluchtend über den Kupplungselementen (32) an den in Bereitstellung am jeweiligen Halter (19) befindlichen wechselbaren Werkzeugteilen (4) positioniert. Zum Ankuppeln werden die Kupplungselemente (31,32) von der Handhabungseinrichtung zugestellt und in formschlüssigen Eingriff gebracht, wobei anschließend die Aufnahmen (28,29) aufeinander zubewegt werden. Diese letztgenannte Bewegungsrichtung ist parallel zur Ausrichtung der Führungselemente (20,33), wobei die wechselbaren Werkzeugteile (4) von den Aufnahmen (28,29) bei zunächst noch offener Verriegelung (7) mitgenommen und entlang der Führungsbolzen (20) verschoben werden. Bei dieser Bewegung werden die wechselbaren Werkzeugteile (4) vom jeweiligen Kraftelement (21) zunehmend distanziert. Dessen Kraftwirkung nimmt dadurch ab, wobei ab einer gewissen Entfernung oder Distanz die Kraft des Treibelements (24) oder Federelements größer ist und dadurch die Verriegelung (7) schließt und die Riegelelemente (22,23) in formschlüssigen Eingriff bringt. Die Länge der Führungselemente (20,33) ist vorzugsweise auf diese entfernungsabhängige Kraftwirkung abgestimmt, so dass die Verriegelung (7) geschlossen wird, während die Führungselemente (20,33) noch im Eingriff stehen.

Mit Schließen der Verriegelung (7) ist der Kupplungsvorgang abgeschlossen. Der Antrieb (27) bewegt dann die Aufnahmen (28,29) und die angekuppelten Werkzeugteile (4) noch so weit, bis auch die Führungselemente (20,33) außer Eingriff geraten. Das gekuppelte Werkzeug (2) ist dann von der Bereitstellung (8) bzw. vom Magazin gelöst. Die jeweils rechten Werkzeuge (2) in Figur 1 bis 4 verdeutlichen diesen Zustand. Das fertig gekuppelte Werkzeug (2) kann dann von der Handhabungseinrichtung (9) weiter bewegt und für den jeweiligen Prozess eingesetzt werden.

Beim Abkuppeln findet ein entgegengesetzter Vorgang statt. Das Werkzeug (2) wird von der Handhabungseinrichtung (9) in eine Übergabestellung an der Bereitstellung (8) gebracht, in der die Führungselemente (20,33) fluchtend zueinander ausgerichtet sind. Anschließend fahren die Aufnahmen (28,29) auseinander, wobei die Führungselemente (20,33) in Eingriff treten. Die Kraftelemente (21) entfalten ihre Wirkung, wobei sie spätestens in der Anschlagstellung der Werkzeugteile (4) am jeweiligen Halter (19) die Verriegelung (7) öffnen. Die Handhabungseinrichtung (9) kann dann das Werkzeugteil (5) anheben und die Kupplungselemente (31,32) außer Eingriff bringen. Zum Zwecke eines Werkzeugwechsels können anschließend in der vorbeschriebenen Weise andere wechselbare Werkzeugteile (4) angekuppelt werden.

In der gezeigten Ausführungsform sind die Werkzeugteile (4) an den Haltern (19) hängend angeordnet. Sie können alternativ stehend oder in einer anderen geeigneten Lage und Ausrichtung angeordnet sein. Dementsprechend kann sich auch die Richtung der Zustellbewegung beim An- und Abkuppeln ändern.

Wie Figur 5 verdeutlicht, kann eine Wechseleinrichtung (1) der vorbeschriebenen Art zusammen mit einer Handhabungseinrichtung (9), insbesondere dem gezeigten mehrachsigen Roboter, eine Arbeitsvorrichtung (3) bilden. Die Zahl der Handhabungseinrichtungen (9) kann auch größer sein. Insbesondere können mehrere Handhabungseinrichtungen (9) gleichartige Werkzeuge (2) benutzen, wobei sie z.B. gleiche Werkzeugteile führen und sich gemeinsam unterschiedlicher wechselbare Werkzeugteile (4) bedienen. Ansonsten können ein oder mehrere Handhabungseinrichtungen (9) auch unterschiedliche Werkzeuge (2) handhaben und bedienen.

Die Handhabungseinrichtung (9) ist vorzugsweise mehrachsig ausgebildet und ist programmierbar. Bevorzugt ist sie als mehrachsiger programmierbarer Roboter ausgebildet, der mehrere rotatorische und/oder translatorische Achsen aufweist.

Figur 5 zeigt eine besonders bevorzugte Ausführungsform eines Roboters (9), der hier als Leichtbauroboter ausgebildet ist. Er besteht aus leichtgewichtigen Materialien, z.B. Leichtmetallen und Kunststoff und hat auch eine kleine Baugröße. Er hat ein niedriges Gewicht und eine entsprechend begrenzte Tragkraft, die z.B. bis zu 20 kg beträgt. Ein solcher Leichtbauroboter mit einem Gewicht von Roboter (9) und Werkzeug (2) von z.B. unter 50 kg, insbesondere von ca. 30 kg, kann mobil sein und kann sich manuell von einem Einsatzort zu einem anderen transportieren lassen. Für einen solchen Leichtbauroboter ist die vorbeschriebene Ausbildung des Werkzeugwechselsystems (1) mit dem geringen Werkzeuggewicht besonders vorteilhaft.

Figur 5 verdeutlicht außerdem eine weitere Ausgestaltungsmöglichkeit des Roboters (9), der eine oder mehrere kraftgesteuerte oder kraftgeregelte Roboterachsen (I - VII) nebst einer zugeordneten und einwirkende Belastungen erfassenden Sensorik (17) aufweist. Der Roboter (9) kann außerdem mindestens eine nachgiebige Roboterachse (I - VII) mit einer Nachgiebigkeitsregelung, insbesondere einer reinen Kraftregelung oder einer Kombination aus Positions- und Kraftregelung aufweisen. Der gezeigte Roboter ist als Gelenkarmroboter ausgebildet und hat z.B. sieben Roboterachsen. Diese weisen jeweils ein Drehlager und einen hier zugeordneten steuerbaren oder regelbaren Antrieb nebst einer Sensorik (17) auf. Die Roboterachsen (I - VII) können außerdem eine steuer- oder schaltbare Bremse aufweisen.

Der gezeigte Roboter (9) weist mehrere bewegliche und miteinander verbundene Glieder (12,13,14,15) auf. Diese sind vorzugsweise gelenkig und über die besagten drehenden Roboterachsen (I - VII) miteinander verbunden. Ferner können einzelne Glieder (13,14) mehrteilig und in sich beweglich ausgebildet sein. Die Roboterachsen (I - VII) und ihre Achsantriebe, insbesondere Drehantriebe sowie die Sensorik (17), sind mit der Robotersteuerung (11) verbunden, welche die Antriebe bzw. Achsantriebe steuern und regeln kann. Das abtriebsseitige Endglied (12) des Roboters (9) ist z.B. als Roboterhand ausgebildet und weist ein um eine Drehachse (16) drehbares Abtriebselement (10), z.B. einen Abtriebsflansch, auf. Die Drehachse (16) bildet die letzte Roboterachse (VII). Am Abtriebselement (17) ist das eine Werkzeugteil (15) montiert. Durch ein ggf. hohles Abtriebselement (10) und ggf. andere Roboterglieder (13,14,15) können eine oder mehrere Leitungen für Betriebsmittel, z.B. Leistungs- und Signalströme, Fluide etc. geführt sein und am Flansch (10) nach außen treten sowie am Werkzeugteil (5) angeschlossen werden.

Die vorgenannte Kraftsteuerung oder Kraftregelung der Roboterachsen (I-VII) bezieht sich auf die Wirkung nach außen am Abtriebselement (17) des Endglieds (12) sowie auf die dort einwirkenden Reaktionskräfte. Roboterintern findet an den drehenden Achsen oder Achsantrieben eine Momentensteuerung oder Momentenregelung statt.

Der Roboter (9) hat vorzugsweise drei oder mehr bewegliche Glieder (12,13,14,15). Im gezeigten Ausführungsbeispiel weist er ein mit einem Untergrund verbundenes Basisglied (15) und das vorerwähnte Endglied (12) sowie zwei Zwischenglieder (13,14) auf, welche mehrteilig und in sich verdrehbar mittels Achsen III und V ausgebildet sind. Die Zahl der Zwischenglieder (13,14) kann alternativ kleiner oder größer sein. In weiterer Abwandlung können einzelne oder alle Zwischenglieder (13,14) in sich drehfest und ohne zusätzliche Achse ausgebildet sein.

Die Sensorik (17) kann z.B. einen oder mehreren Sensoren an einer oder mehreren Achsen (I - VII) aufweisen. Diese Sensoren können die gleiche oder unterschiedliche Funktionen haben. Sie können insbesondere als Kraft- oder Momentensensoren ausgebildet sein und zum Erfassen von Belastungen, insbesondere Momenten, ausgebildet sein, die von außen auf den Roboter über das Abtriebselement (10) einwirken. Die Sensoren können ferner Drehbewegungen und ggf. Drehpositionen detektieren.

Mittels der Sensorik (17) kann von der Steuerung (11) die vorgenannte Nachgiebigkeitsregelung realisiert werden. Hierdurch kann einerseits der Roboter (9) das Werkzeug (2) federnd und ausweichfähig halten und führen, wobei z.B. Crashs und insbesondere Unfälle mit Personen vermieden werden können. Die Eigenschaft kann auch zum manuellen Teachen und Programmieren benutzt werden mit dem Vorteil einer schnellen und einfachen Programmierung, Inbetriebnahme sowie Anpassbarkeit an unterschiedliche Werkzeuge (2) und damit auszuführende Prozesse und Jobs. Über eine Belastungserfassung der Sensorik (17) kann außerdem das Suchen und Finden von Arbeitspositionen und auch von der Kuppelstellung unterstützt und erleichtert werden. Auch Winkelfehler in der Relativstellung der Glieder (12,13,14,15) können detektiert und bedarfsweise korrigiert werden.

Die Sensorik (17) kann ferner zur Überprüfung der Formhaltigkeit und Funktionsfähigkeit der Werkzeuge (2) benutzt werden. Der Roboter (9) kann z.B. das Werkzeug (2) mit den zu überprüfenden Elementen, insbesondere den wechselbaren Werkzeugteilen (4) an einem Referenzpunkt mit bekannter Position in einen leichten Berührungskontakt bringen, wobei die Roboterbewegung und -position überwacht und eine Berührung mittels der Sensorik (17) detektiert wird. Durch die Nachgiebigkeitsregelung werden schadensträchtige Kollisionen vermieden und die Roboterbewegung bei Überschreiten einer vorgegebenen Belastungsschwelle gestoppt oder abgeschaltet. Durch Vergleich der Soll- und Istposition des Roboters bei mittels Sensorik (17) detektiertem Kontakt kann festgestellt werden, ob ein Werkzeug (2) intakt oder beschädigt ist und ob insbesondere der programmierte Tool-Center-Point (TCP) des Werkzeugs (2) sich noch an der vorgesehenen Position befindet.

Ferner kann beim An- und Abkuppeln durch Überwachung der aufgetretenen Belastungen die korrekte Funktion der Kupplungseinrichtung (6) und die korrekte Lage der wechselbaren Werkzeugteile (4) an ihrem Halter (19) kontrolliert werden. Auch die Wirkung des Kraftelements (21) kann über eine Belastungsdetektion überwacht werden.

Abwandlungen der gezeigten und beschriebenen Ausführungsformen sind in verschiedener Weise möglich. Von den gezeigten zwei Aufnahmen (28,29) kann eine starr und eine andere beweglich und angetrieben sein. Entsprechendes gilt für Mehrfachanordnungen von Aufnahmen (28,29). Die Ausbildung und Zuordnung der Kupplungselemente (30,31,32) und der Führungselemente (20,33) kann variieren. Insbesondere kann deren Zuordnung zur Aufnahme (28,29), zum Halter (19) und zum wechselbaren Werkzeugteil (4) vertauscht sein.

Das mehrteilige Werkzeug (2) kann in anderer Weise ausgebildet sein und funktionieren. Es kann insbesondere als Bearbeitungswerkzeug zum Fügen, Auftragen von Materialien, zu Formgebungsverfahren oder zu anderen Zwecken ausgebildet sein. Es kann z.B. aus einem Basisteil (5) und einem einzelnen, wechselbaren Werkzeugteil (4) bestehen, welches z.B. Werkzeugelemente, z.B. eine Düse, ein Messer, einen Auftragkopf, einen Schweißkopf oder dgl. trägt. Die Werkzeugteile (4,5) können dabei als Tragelemente ausgebildet sein. Die Zustellbewegung der Werkzeugteile (4,5) zum Halter (19) hin und von diesem weg kann durch eine Bewegung der Handhabungseinrichtung (9) bewirkt werden.

Auch die Ausbildung der Riegelelemente (22,23) kann abgeändert werden. Insbesondere kann das mit dem Kraftelement (21) zusammen wirkende Riegelelement (22) eine andere Kinematik haben. Es kann insbesondere als Schwenkteil, z.B. als Schwenkhebel, ausgebildet sein.

Das Treibelement (24) kann in anderer Weise ausgestaltet sein und kann z.B. aus einem Magneten bestehen, der ggf. schwächer als das Kraftelement (21) ist.

Auch das Kraftelement (21) kann in anderer Weise ausgebildet sein, wobei es eine Zug- oder Abstoßkraft auf das Riegelelement (22), vorzugsweise berührungslos, ausübt. Bei einer Abstoßkraft wird die Festhaltewirkung am Halter (19) auf andere Weise erreicht. Eine solche Wirkung kann z.B. auf Unterdruck und Saugkraft basieren.

### BEZUGSZEICHENLISTE

- 1: Werkzeugwechselsystem
- 2: Werkzeug, Greifer
- 3: Arbeitsvorrichtung
- 4: Werkzeugteil wechselbar, Finger
- 5: Werkzeugteil, Basisteil
- 6: Kupplungseinrichtung
- 7: Verriegelung, Schließmechanismus
- 8: Bereitstellung, Magazin
- 9: Handhabungseinrichtung, Roboter, Leichtbauroboter
- 10: Abtriebselement, Abtriebsflansch, Drehflansch
- 11: Steuerung, Robotersteuerung
- 12: Glied, Endglied, Hand
- 13: Glied, Zwischenglied
- 14: Glied, Zwischenglied
- 15: Glied, Basisglied
- 16: Drehachse
- 17: Sensorik
- 18: Ständer
- 19: Halter für Werkzeugteil
- 20: Führungselement, Führungsbolzen
- 21: Krafterzeuger, Magnet
- 22: Riegelelement, Riegelbolzen
- 23: Riegelelement, Riegelöffnung
- 24: Treibelement, Federelement
- 25: Riegelkopf, Bolzenkopf
- 26: Korpus, Gehäuse
- 27: Antrieb
- 28: Aufnahme, Adapter
- 29: Aufnahme, Adapter
- 30: Kupplungselement, Ausrichtkante
- 31: Kupplungselement, Kupplungsbolzen, Rastbolzen
- 32: Kupplungselement, Kupplungsöffnung
- 33: Führungselement, Führungsöffnung

- I - VII: Achse von Roboter

## Patentansprüche

1. Werkzeugwechselsystem mit einem mehrteiligen Werkzeug (2) und einer Bereitstellung (8) für ein wechselbares Werkzeugteil (4), wobei für die zu kuppelnden Werkzeugteile (4,5) eine Kupplungseinrichtung (6) mit einer formschlüssigen, selbstschließenden Verriegelung (7) vorgesehen ist und an der Bereitstellung (8) ein Halter (19) für ein wechselbares Werkzeugteil (4) angeordnet ist, **dadurch gekennzeichnet, dass** der Halter (19) ein Kraftelement (21) aufweist, das eine eigene Kraft zur Betätigung der Verriegelung (7) entwickelt, die auf die Verriegelung (7) am gehaltenen Werkzeugteil (4) öffnend einwirkt.

2. Werkzeugwechselsystem nach Anspruch 1, **dadurch gekennzeichnet, dass** das Kraftelement (21) das wechselbare Werkzeugteil (4) in der Haltestellung an der Bereitstellung (8) festhält und die Kupplungseinrichtung (6) öffnet.

3. Werkzeugwechselsystem nach Anspruch 1 oder 2, **dadurch gekennzeichnet, dass** der Halter (19) und das wechselbare Werkzeugteil (4) formschlüssige Führungselemente (20,33), insbesondere parallele Führungsbolzen (20) und korrespondierende Führungsöffnungen (33), aufweisen.

4. Werkzeugwechselsystem nach Anspruch 1, 2 oder 3, **dadurch gekennzeichnet, dass** das Kraftelement (21) in Haltestellung des wechselbaren Werkzeugteils (4) eine im wesentlichen berührungslose Kraft, insbesondere eine Zugkraft, auf die Verriegelung (7) ausübt.

5. Werkzeugwechselsystem nach einem der vorhergehenden Ansprüche, **dadurch gekennzeichnet, dass** das Kraftelement (21) eine distanzabhängige Wirkung aufweist und durch Entfernen des wechselbaren Werkzeugteils (4) vom Halter (19) deaktivierbar ist.

6. Werkzeugwechselsystem nach einem der vorhergehenden Ansprüche, **dadurch gekennzeichnet, dass** der Führungsweg der Führungselemente (20,33) und der Wirkweg des Kraftelements (21) derart aufeinander abgestimmt sind, dass bei Deaktivierung des Kraftelements (21) die Verriegelung (7) und die Kupplungseinrichtung (6) geschlossen werden, wobei das wechselbare Werkzeugteil (4) noch am Halter (19) geführt ist.

7. Werkzeugwechselsystem nach einem der vorhergehenden Ansprüche, **dadurch gekennzeichnet, dass** das Kraftelement (21) als Magnet, insbesondere als Dauermagnet, ausgebildet ist.

8. Werkzeugwechselsystem nach einem der vorhergehenden Ansprüche, **dadurch gekennzeichnet, dass** das Werkzeug (2) ein mit einer Handhabungseinrichtung (9), insbesondere einem Roboter, verbindbares Werkzeugteil (5) und mehrere wechselbare, insbesondere formschlüssig und spielfrei kuppelbare und verriegelbare, Werkzeugteile (4) aufweist.

9. Werkzeugwechselsystem nach einem der vorhergehenden Ansprüche, **dadurch gekennzeichnet, dass** die Verriegelung (7) formschlüssig ineinander greifende Riegelelemente (22,23) und ein gegen das Kraftelement (21) wirkendes Treibelement (24), insbesondere ein Federelement, aufweist.

10. Werkzeugwechselsystem nach einem der vorhergehenden Ansprüche, **dadurch gekennzeichnet, dass** ein Werkzeugteil (5) als Basisteil ausgebildet ist und einen Korpus (26) mit mindestens einer abstehenden Aufnahme (28,29) und einem steuerbaren Antrieb (27) für ein wechselbares Werkzeugteil (4), insbesondere einen Greiffinger, aufweist.

11. Werkzeugwechselsystem nach einem der vorhergehenden Ansprüche, **dadurch gekennzeichnet, dass** ein wechselbares Werkzeugteil (4) zum Deaktivieren des Kraftelements (21) und zum Verriegeln der Kupplungseinrichtung (6) von einem Antrieb (27) des Werkzeugs (2) oder von einer mit dem Werkzeug (2) verbundenen Handhabungseinrichtung (9), insbesondere einem Roboter, bewegbar ist.

12. Arbeitsvorrichtung mit einem mehrachsigen programmierbaren Roboter (9) und einem Werkzeugwechselsystem (1), **dadurch gekennzeichnet, dass** das Werkzeugwechselsystem (1) nach mindestens einem der Ansprüche 1 bis 11 ausgebildet ist.

13. Arbeitsvorrichtung nach Anspruch 12, **dadurch gekennzeichnet, dass** der Roboter (9) eine oder mehrere kraftgesteuerte oder kraftgeregelte Roboterachsen (I - VII) mit einer zugeordneten, einwirkende Belastungen erfassenden Sensorik (17) aufweist.

14. Arbeitsvorrichtung nach Anspruch 12 oder 13, **dadurch gekennzeichnet, dass** der Roboter (9) mindestens eine nachgiebige Roboterachse (I - VII) mit einer Nachgiebigkeitsregelung, insbesondere einer reinen Kraftregelung oder einer Kombination aus Positions- und Kraftregelung, aufweist.

15. Arbeitsvorrichtung nach Anspruch 12, 13 oder 14, **dadurch gekennzeichnet, dass** der Roboter (9) mehrere miteinander beweglich, insbesondere drehbar, verbundene Glieder (12,13,14,15) aufweist, wobei die Roboterachsen (I - VII) jeweils ein Lager, insbesondere ein Drehlager, und einen hier zugeordneten steuerbaren oder regelbaren Achsantrieb, insbesondere Drehantrieb, mit einer Sensorik (17) aufweisen.

## Claims

1. Tool changing system having a multiple-part tool (2) and a provider unit (8) for an interchangeable tool part (4), wherein a coupling installation (6) having a form-fitting self-closing locking feature (7) is provided for the tool parts (4, 5) to be coupled, and a holder (19) for an interchangeable tool part (4) is disposed on the provider unit (8), **characterized in that** the holder (19) has a force element (21) which generates a dedicated force for activating the locking feature (7), said force acting in an opening manner on the locking feature (7) on the tool part (4) being held.

2. Tool changing system according to Claim 1, **characterized in that** the force element (21) retains the interchangeable tool part (4) in the holding position on the provider unit (8) and opens the coupling installation (6).

3. Tool changing system according to Claim 1 or 2, **characterized in that** the holder (19) and the interchangeable tool part (4) have form-fitting guiding elements (20, 33), in particular parallel guide bolts (20) and corresponding guide openings (33).

4. Tool changing system according to Claim 1, 2, or 3, **characterized in that** the force element (21) in the holding position of the interchangeable tool part (4) exerts a substantially non-contacting force, in particular a tensile force, on the locking feature (7).

5. Tool changing system according to one of the preceding claims, **characterized in that** the force element (21) has a distance-dependent effect, and is de-activatable by removing the interchangeable tool part (4) from the holder (19).

6. Tool changing system according to one of the preceding claims, **characterized in that** the guide path of the guide elements (20, 33) and the effective path of the force element (21) are mutually adapted in such a manner that the locking feature (7) and the coupling installation (6) are closed upon deactivation of the force element (21), wherein the interchangeable tool part (4) is still guided on the holder (19).

7. Tool changing system according to one of the preceding claims, **characterized in that** the force element (21) is configured as a magnet, in particular as a permanent magnet.

8. Tool changing system according to one of the preceding claims, **characterized in that** the tool (2) has a tool part (5) that is connectable to a handling installation (9), in particular to a robot, and a plurality of interchangeable tool parts (4) that are in particular coupleable and lockable in a form-fitting and clearance-free manner.

9. Tool changing system according to one of the preceding claims, **characterized in that** the locking feature (7) has interlocking elements (22, 23) that mutually engage in a form-fitting manner, and a driving element (24), in particular a spring element, which acts counter to the force element (21).

10. Tool changing system according to one of the preceding claims, **characterized in that** one tool part (5) is configured as a base part and has a main body (26) with at least one projecting receptacle (28, 29) and a controllable drive (27) for an interchangeable tool part (4), in particular a gripping finger.

11. Tool changing system according to one of the preceding claims, **characterized in that**, for deactivation of the force element (21) and for locking the coupling installation (6), an interchangeable tool part (4) is movable by a drive (27) of the tool (2) or by a handling installation (9), in particular a robot, that is connected to the tool (2).

12. Operating device having a multiaxial programmable robot (9) and a tool changing system (1), **characterized in that** the tool changing system (1) is configured according to at least one of Claims 1 to 11.

13. Operating device according to Claim 12, **characterized in that** the robot (9) has one or a plurality of force-controlled or force-regulated robot axis/axes (I - VII) having an assigned sensor mechanism (17) that detects stress acting thereon.

14. Operating device according to Claim 12 or 13, **characterized in that** the robot (9) has at least one resilient robot axis (I - VII) having a resilience regulating feature, in particular a pure force regulating feature, or a combination of a position and force regulating feature.

15. Operating device according to Claim 12, 13, or 14, **characterized in that** the robot (9) has a plurality of movably, in particular rotatably, interconnected members (12, 13, 14, 15), wherein the robot axes (I - VII) each have one bearing, in particular one pivot bearing, and one controllable or regulatable axial drive, in particular a rotary drive, assigned thereto, said drive having a sensor mechanism (17).

## Revendications

1. Système de changement d'outils avec un outil en plusieurs parties (2) et une réserve (8) pour une partie d'outil interchangeable (4), dans lequel il est prévu pour les parties d'outil à coupler (4, 5) un dispositif de couplage (6) avec un verrouillage à emboîtement autobloquant (7) et un support (19) pour une partie d'outil interchangeable (4) est disposé sur la réserve (8), **caractérisé en ce que** le support (19) présente un élément de force (21), qui développe une force propre pour l'actionnement du verrouillage (7), qui agit sur le verrouillage (7) pour l'ouverture à la partie d'outil maintenue (4).

2. Système de changement d'outils selon la revendication 1, **caractérisé en ce que** l'élément de force (21) immobilise la partie d'outil interchangeable (4) dans la position de maintien sur la réserve (8) et ouvre le dispositif de couplage (6).

3. Système de changement d'outil selon la revendication 1 ou 2, **caractérisé en ce que** le support (19) et la partie d'outil interchangeable (4) présentent des éléments de guidage à emboîtement (20, 33), en particulier des boulons de guidage parallèles (20) et des ouvertures de guidage correspondantes (33).

4. Système de changement d'outils selon la revendication 1, 2 ou 3, **caractérisé en ce que** l'élément de force (21) exerce, dans la position de maintien de la partie d'outil interchangeable (4), une force essentiellement sans contact, en particulier une force de traction, sur le verrouillage (7).

5. Système de changement d'outils selon l'une quelconque des revendications précédentes, **caractérisé en ce que** l'élément de force (21) présente une action dépendant de la distance et peut être désactivé par éloignement de la partie d'outil interchangeable (4) du support (19).

6. Système de changement d'outils selon l'une quelconque des revendications précédentes, **caractérisé en ce que** le chemin de guidage des éléments de guidage (20,33) et le chemin d'action de l'élément de force (21) sont accordés l'un à l'autre de telle manière que, lors de la désactivation de l'élément de force (21), le verrouillage (7) et le dispositif de couplage (6) soient fermés, dans lequel la partie d'outil interchangeable (4) est encore guidée sur le support (19).

7. Système de changement d'outils selon l'une quelconque des revendications précédentes, **caractérisé en ce que** l'élément de force (21) est formé par un aimant, en particulier par un aimant permanent.

8. Système de changement d'outils selon l'une quelconque des revendications précédentes, **caractérisé en ce que** l'outil (2) présente une partie d'outil (5) pouvant être assemblée à un dispositif de manipulation (9), en particulier à un robot, et plusieurs parties d'outil (4) interchangeables, en particulier pouvant être couplées et verrouillées par emboîtement et sans jeu.

9. Système de changement d'outils selon l'une quelconque des revendications précédentes, **caractérisé en ce que** le verrouillage (7) présente des éléments de verrou (22, 23) s'engageant l'un dans l'autre par emboîtement et un élément d'entraînement (24), en particulier un élément de ressort, agissant contre l'élément de force (21).

10. Système de changement d'outils selon l'une quelconque des revendications précédentes, **caractérisé en ce qu'**une partie d'outil (5) est formée comme partie de base et présente un corps (26) avec au moins un logement en saillie (28, 29) et un entraînement réglable (27) pour une partie d'outil interchangeable (4), en particulier un doigt de préhension.

11. Système de changement d'outils selon l'une quelconque des revendications précédentes, **caractérisé en ce qu'**une partie d'outil interchangeable (4) est déplaçable par un entraînement (27) de l'outil (2) ou par un dispositif de manipulation (9) relié à l'outil (2), en particulier un robot, pour la désactivation de l'élément de force (21) et pour le verrouillage du dispositif de couplage (6).

12. Dispositif de travail avec un robot multiaxe programmable (9) et un système de changement d'outils (1), **caractérisé en ce que** le système de changement d'outils (1) est formé selon au moins une des revendications 1 à 11.

13. Dispositif de travail selon la revendication 12, **caractérisé en ce que** le robot (9) présente un ou plusieurs axe(s) de robot (I - VII) à commande assistée ou à régulation assistée avec des capteurs associés (17) qui détectent les charges agissantes.

14. Dispositif de travail selon la revendication 12 ou 13, **caractérisé en ce que** le robot (9) présente au moins un axe de robot flexible (I - VII) avec une régulation de la flexibilité, en particulier une régulation assistée pure ou une combinaison de régulation en position et en force.

15. Dispositif de travail selon la revendication 12, 13 ou 14, **caractérisé en ce que** le robot (9) présente plusieurs organes (12, 13, 14, 15) reliés entre eux de façon mobile, en particulier rotative, dans lequel les axes de robot (I - VII) présentent respectivement un palier, en particulier un palier rotatif, et un entraînement d'axe pouvant être commandé ou régulé, associé à celui-ci, en particulier un entraînement rotatif, avec des capteurs (17).
